# EUROPEAN PATENT APPLICATION

(11) **EP 3 913 509 A1**
(43) Date of publication of application: **24.11.2021**
(21) Application number: 20315255.8
(22) Date of filing: 22.05.2020
(51) Int. Cl.: G06F 21/10, G06F 21/60, H04L 29/06, H04W 12/10

(54) **METHOD TO SECURE COMPUTER CODE**

(71) Applicant: THALES DIS FRANCE SA, 92190 Meudon (FR)
(72) Inventor: Leveque, Sylvain, 92190 Meudon (FR); DE Francesco, Samuele, 92190 Meudon (FR)
(74) Representative: Bricks, Amélie

(57) **Abstract**

The present invention relates to a method for securing a software code comprising at least one sensitive string,
comprising the following steps performed by a processor of a cryptographic device :
• determining (S1) a salt value,
• generating (S2) an encrypted sensitive string by applying to said sensitive string an encryption process depending on the salt value and on an encryption key,
• concatenating (S3) the salt value and the encrypted sensitive string to obtain a concatenated result,
• replacing (S4) in said software code said sensitive string by a protected value depending on said concatenated result.

## Description

### FIELD OF THE INVENTION

The present invention relates to the field of software protection. It discloses a method for securing computer code enabling to encrypt efficiently sensitive strings in the code.

### BACKGROUND OF THE INVENTION

Today, many services are provided to users by running software applications. Such applications may store and use sensitive information such as secret keys, personal identifiers, bank account information... In order to prevent a malicious use of such data by an attacker, it is mandatory to prevent anyone but their rightful owner from accessing such data by analyzing the execution of some software code handling such sensitive data.

An attacker may try to understand the operation of a software by reverse-engineering the compiled code executed by the system. He may then access secure information handled by the software and/or modify the software in order to perform malicious operations. Such a reverse-engineering is usually performed using tools, such as code analyzers and debuggers, that extract from a compiled code information about the operations of the code, such as a control flow graph describing the order of execution of instructions in the code.

An attacker may particularly gain information on the code from public strings of the code, such as the public symbols used to name the public functions of modules of the code. Such an attacker may for example look for encryption or decryption function in order to analyze it and discover a secret key used by such functions.

In order to prevent an attacker from reading such strings, it is common practice to encode or encrypt it. Nevertheless, most commonly used encoding/encrypting schemes have a drawback which may enable an attacker to gain knowledge from encrypted strings: strings beginning with the same prefix are turned by encoding/encryption into values also beginning with a same prefix. Such a property poses a particular threat in the case of code modules public function names.

The functions of a module can be called from outside the code by their public symbol. Most code developers follow naming conventions which recommend that the public symbol of a function begins with the name of the module or the software to which it belongs. By doing so, the public symbols of all functions of a module have the name of this module as a prefix. For example all cryptographic function such as crypto_decrypt() performing decryption or crypto_set_key() setting an encryption key, may start with the prefix "crypto". Consequently, when usual encoding/encrypting schemes are used to encrypt such public symbols, all the encrypted symbols of the functions of a module also share a common prefix. For example cryptographic functions encrypted symbol may all start with "_2bk1YU8". An attacker may take advantage of this common prefix and guess the role of some functions after he has analyzed by reverse engineering another function whose encrypted symbol has the same prefix. For example, if he has found which function is crypto_decrypt(), and deduced that cryptographic functions all begin with "_2bk1YU8" he knows crypto_set_key() function is to be found among the other functions whose encrypted public symbol begins with "_2bk1YU8".

Consequently there is a need for a method enabling more efficient protection against code analysis by preventing strings having a common prefix from sharing a common prefix after they have been encrypted.

### SUMMARY OF THE INVENTION

For this purpose and according to a first aspect, this invention therefore relates to a method for securing a software code comprising at least one sensitive string, comprising the following steps performed by a processor of a cryptographic device:
- determining a salt value,
- generating an encrypted sensitive string by applying to said sensitive string an encryption process depending on the salt value and on an encryption key,
- concatenating the salt value and the encrypted sensitive string to obtain a concatenated result,
- replacing in said software code said sensitive string by a protected value depending on said concatenated result.

Such a method enables to perform an encryption which prevents common prefixes between encrypted strings.

Determining said salt value may comprise : picking at random said salt value or deriving it from a predetermined secret value.

In a first embodiment, generating an encrypted sensitive string comprises :
- applying a XOR between the salt value and the sensitive string to obtain an encryption input,
- encrypting said obtained encryption input with said encryption key.

In a second embodiment, generating an encrypted sensitive string comprises :
- concatenating the salt value and the sensitive string to obtain an encryption input,
- encrypting said obtained encryption input with said encryption key.

It enables to modify the sensitive string before encrypting it, which prevents the existence of a common prefix between values getting encrypted.

In a third embodiment, generating an encrypted sensitive string comprises :
- applying a XOR between the salt value and the encryption key to obtain a diversified encryption key,
- encrypting said sensitive string with said obtained diversified encryption key.

In a fourth embodiment, generating an encrypted sensitive string comprises :
- concatenating the salt value and the encryption key to obtain a diversified encryption key,
- encrypting said sensitive string with said obtained diversified encryption key.

By doing so, the key used to encrypt the sensitive string is diversified by combining the encryption key with the salt. Each sensitive value is encrypted with a different combination of salt and key which ensures that two sensitive strings sharing a common prefix will lead to generating two encrypted values which do not share a common prefix.

In a fifth embodiment, generating an encrypted sensitive string comprises :
- using the salt value as an initialization vector for the encryption process,
- encrypting said sensitive string with said encryption key.

By doing so, the encryption process also depends on the salt value which leads to different prefixes for different sensitive strings.

Said sensitive string may be a public symbol of a sensitive function of a module of said software code.

In this case, applying the encryption according to the invention enables to prevent an attacker from guessing the role of some functions after he has analyzed by reverse engineering another function whose encrypted symbol has the same prefix.

Said protected value may be derived from said concatenated result by encoding said concatenated result.

Said encoding of said concatenated result may use a Base64 encoding scheme or a proprietary encoding scheme.

According to a second aspect, this invention relates to a computer program product directly loadable into the memory of at least one computer, comprising software code instructions for performing the steps of any one of the method according to the first aspect, when said product is run on the computer.

According to a third aspect, this invention relates to a non-transitory computer readable medium storing executable computer code that when executed by a cryptographic device comprising a processing system having at least one hardware processor performs the method according to the first aspect.

According to a fourth aspect, this invention relates to a cryptographic device comprising a processor configured to execute the steps of any one of the method according to the first aspect.

According to a fifth aspect, this invention relates to a non-transitory machine-readable storage medium encoded with instructions of a secure software code for execution by a second processor of an execution device, wherein said secure software code is a software code secured according to the method according to the first aspect.

According to a sixth aspect, this invention relates to a method for executing a software code secured according to the method according to the first aspect and comprising the following steps performed by a second processor of an execution device :
- retrieving a concatenated result from a protected value comprised in said secure software code;
- extracting a salt value and an encrypted sensitive string from the concatenated result;
- decrypting the encrypted sensitive string using a decryption key and the extracted salt value.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 illustrates schematically a cryptographic device according to an embodiment of the present invention;
- Figure 2 illustrates schematically an execution device according to an embodiment of the present invention;
- Figure 3 illustrates schematically a method for securing a software code according to an embodiment of the present invention;
- Figure 4 illustrates schematically a method for executing a secure software code according to an embodiment of the present invention.

### DETAILED DESCRIPTION OF EMBODIMENTS OF THE INVENTION

The invention aims at securing a software code SC by encrypting sensitive strings of the software code, in such a way that encrypting strings sharing a common prefix generates encrypted strings which do not share a common prefix anymore. It produces a secure software code SSC such that it would be hard for an attacker to gain information on a particular encrypted string from its resemblance with another encrypted string of the same software code.

In order to do so, the main idea of the invention is to make the encryption of a sensitive string depend on another value, called a salt. The salt may for example be combined with the sensitive string before its encryption or it may be combined with an encryption key to generate a unique key to be used for the encryption of this sensitive string only. By doing so, the encrypted string generated by the encryption depends on the salt and the encryption of two strings having a common prefix generates two encrypted strings which do not share any common prefix.

A first aspect of the invention is a method for securing a software code SC comprising at least one sensitive string. Such a sensitive string may for example be a public symbol of a sensitive function of a module of said software code.

Such a securing method is performed by a cryptographic device 10 treating the software code and producing the secure software code SSC. The obtained secure software code can then be securely executed by an execution device 20.

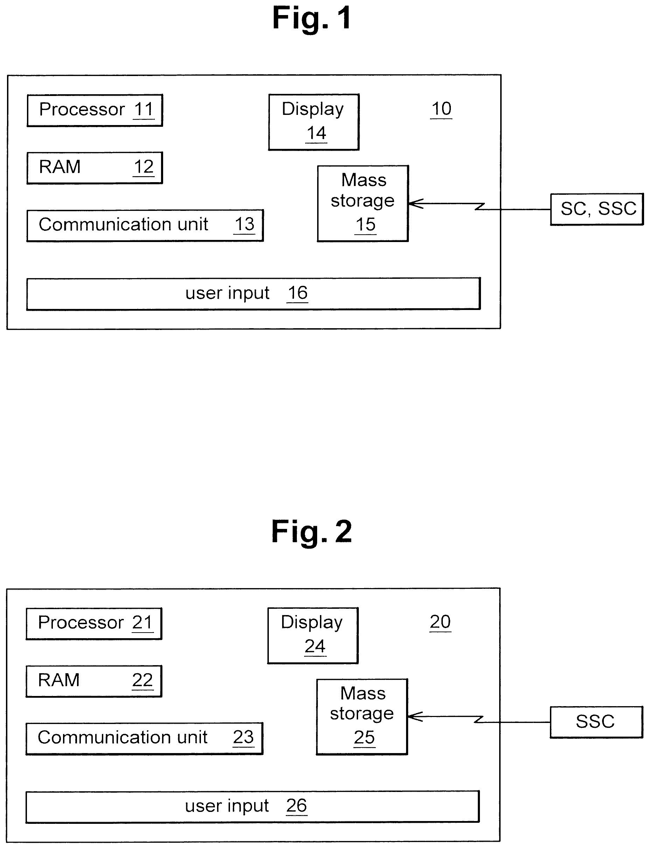

As shown on **Figure 1****,** such a cryptographic device 10 may be any electronic device including a processor. For example it may be a personal computer PC on which a development environment was installed. Figure 1 describes an exemplary embodiment of such a cryptographic device comprising a first processor 11, a first RAM memory 12, a first communication unit 13 such as an Ethernet or Wifi network adapter, a first display 14, first mass storage means 15 such as a hard drive, and first user input means 16. The software code to be secured SC may be stored on the first mass storage means 15 of the cryptographic device. The secure software code SSC, obtained after the securing device 10 applies the method according to the first aspect to the software code, can also be stored on the first mass storage 15.

**Figure 2** describes an exemplary embodiment of the execution device 20. For example it may be a personal computer PC, a mobile device such as a smartphone or a tablet, or a public terminal in a bank or a point of sale. It may also be a simple chip included in a smart card or a credit card. It may comprise a second processor 21, a second RAM memory 22, a second communication unit 23 such as an Ethernet or Wifi network adapter, a second display 24, second mass storage means 25 such as a hard drive, and second user input means 26. The secure software code SSC, to be executed by the second processor 21 of the execution device 20, may be stored on the second mass storage means 25 of the executing device. The electronic device 20 may be of any type similar or different than the one of the cryptographic device. Both devices may share the same hardware architecture, such as x86, ARM or PowerPC, or have different architectures.

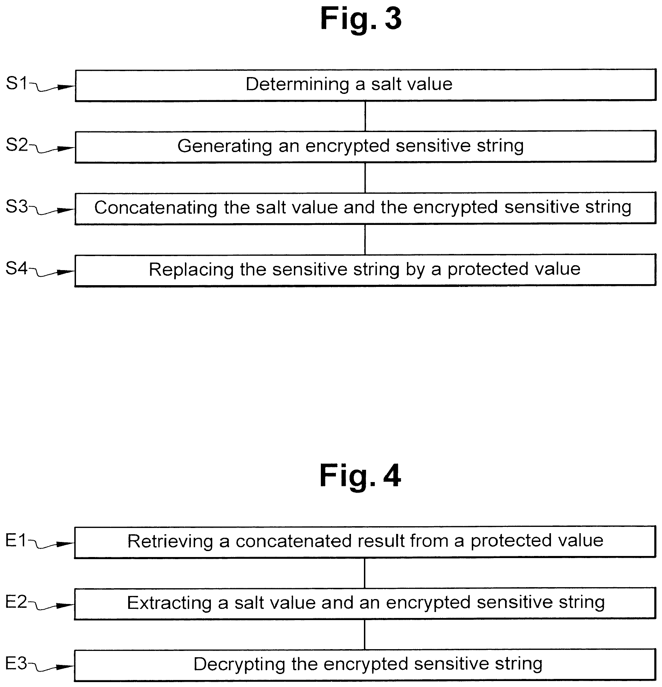

The following paragraphs describe the steps of the method according to the first aspect of the invention, securing the software code SC and producing the secure software code SSC, as depicted on **Figure 3****.** These securing steps are performed by the first processor 11 of the cryptographic device 10 and are all labeled with the letter "S" followed by the number of the step.

When needed, reference is made to steps performed by the execution device 20 when executing the secure software code, after the method according to the first aspect is completed. Such execution steps are labeled with the letter "E" followed by the number of the step.

In a first securing step S1, the first processor 11 of the cryptographic device 10 determines a salt value to be used for the encryption of a particular sensitive string of the software code to be secured.

Such a salt value may for example be picked at random or derived from a predetermined secret value stored in the first RAM memory 12, or the first mass storage means 15 of the cryptographic device.

In order to make very low the probability of using twice the same salt value for two sensitive strings of the same software code, the salt size shall be above a minimum size. For example the salt value may have a size of at least 16 bits.

In a second securing step S2, the first processor 11 of the cryptographic device 10 generates an encrypted sensitive string by applying to said sensitive string an encryption process depending on the salt value and on an encryption key. By doing so, the generated encrypted sensitive strings depend on the salt in such a way that they will not share a common prefix even if the sensitive strings that are encrypted do share a common prefix.

Such an encryption process may be as simple as performing a XOR operation or may involve more elaborated encryption schemes such as blockciphers or streamciphers. The salt value itself may be used as encryption key for the encryption process, or the encryption key may be different from the salt value.

In a first embodiment, generating the encrypted sensitive string comprises:
- combining the salt value and the sensitive string by applying a XOR between the salt value and the sensitive string to obtain an encryption input,
- and then encrypting the obtained encryption input with the encryption key.

In a second embodiment, generating the encrypted sensitive string comprises:
- combining the salt value and the sensitive string by concatenating the salt value and the sensitive string to obtain an encryption input,
- and then encrypting the obtained encryption input with the encryption key.

In these two embodiments, combining the salt with the sensitive string before encryption enables to change the value to be encrypted from a sensitive string which may share a common prefix with another string, to an encryption input which does not share a common prefix anymore with other encryption inputs to be encrypted.

When the encryption process uses symmetric keys, the salt may also be used to diversify the value used as encryption key.

In a third embodiment, generating the encrypted sensitive string comprises:
- applying a XOR between the salt value and the encryption key to obtain a diversified encryption key,
- encrypting the sensitive string with the obtained diversified encryption key.

In a fourth embodiment, generating the encrypted sensitive string comprises:
- concatenating the salt value and the encryption key to obtain a diversified encryption key,
- encrypting the sensitive string with the obtained diversified encryption key.

In these two last embodiments, the key used to encrypt the sensitive string is diversified by combining the encryption key with the salt. By doing so, each sensitive value is encrypted with a different key which ensures that two sensitive strings sharing a common prefix will lead to generating two encrypted values which do not share a common prefix.

In a fifth embodiment, the encryption process may be initialized by an initialization vector, such as in CBC encryption process. In such a case, generating an encrypted sensitive string may comprise:
- using the salt value as an initialization vector for the encryption process,
- encrypting said sensitive string with said encryption key.

By doing so, the initialization of the encryption process depends on the salt, which makes the encryption process output encrypted sensitive strings which don't share a common prefix even if they did before encryption.

A major drawback of making either the encryption key or the value that is encrypted depend on the salt value is that decryption of the generated encrypted sensitive string requires knowledge of the salt used to generate the encrypted sensitive string.

Consequently, in order to provide the salt value for later decryption of the encrypted sensitive string, in a third securing step S3, the first processor 11 of the cryptographic device 10 concatenates the salt value and the encrypted sensitive string to obtain a concatenated result ; and replaces in a fourth securing step S4 in the software code the sensitive string by a protected value depending on this concatenated result. The protected value may be the concatenated result itself. Alternatively, in order to ensure that the protected value is a printable string, the protected value may be derived from the concatenated result by encoding the concatenated result, for example using a Base64 encoding or a proprietary encoding.

By doing so, when the execution device 20 executes the secured software code SSC, and for example calls functions of a module whose symbol has been encrypted using the method described above, the execution device has access to the salt value used for the encryption of the public symbols of the module and is able to decrypt the encrypted sensitive strings to obtain the true, unencrypted, names of the functions of the module.

The steps performed by the second processor 21 of the execution device 20 for decrypting a protected value comprised in the secure software code SSC obtained after the cryptographic device 10 applies the method according to the first aspect to the software code SC described above are detailed in the following paragraphs and illustrated on **figure 4****.**

In a first execution step E1, the second processor 21 of the execution device retrieves the concatenated result from the protected value.

In a second execution step E2, the second processor extracts the salt value and the encrypted sensitive string from the concatenated result, by splitting it.

In a third execution step E3, the second processor decrypts the encrypted sensitive string using a decryption key and the extracted salt value.

Depending on how the encrypted sensitive string was generated, the second processor may for example :
- decrypt the encrypted sensitive string using the decryption key and split the decryption result;
- decrypt the encrypted sensitive string using the decryption key and apply a XOR between the salt value and the decryption result;
- decrypt the encrypted sensitive string using as key a concatenation of the decryption key and the salt value;
- decrypt the encrypted sensitive string using as key the result of a XOR between the decryption key and the salt value.

According to a second aspect, this invention relates to a computer program product directly loadable into the memory of at least one computer, comprising software code instructions for performing the steps of any one of the method according to the first aspect, when said product is run on the computer.

According to a third aspect, this invention relates to a non-transitory computer readable medium storing executable computer code that when executed by a cryptographic device 10 comprising a processor 11 performs the method according to the first aspect.

According to a fourth aspect, this invention relates to a non-transitory computer medium encoded with instructions of a secure software code SSC for execution by the second processor 21 of the execution device 20, wherein said secure software code is a software code secured according to the method according to the first aspect.

As a result, the proposed method enables to encrypt sensitive strings in a software code, such as public symbols of a code module, in such a way that encrypting sensitive strings sharing a common prefix generates encrypted strings which do not share a common prefix anymore. Such a method therefore prevents an attacker from taking advantage of a common prefix between two strings to gain knowledge about the software code.

## Claims

1. A method for securing a software code comprising at least one sensitive string,
comprising the following steps performed by a processor (11) of a cryptographic device (10) :
• determining (S1) a salt value,
• generating (S2) an encrypted sensitive string by applying to said sensitive string an encryption process depending on the salt value and on an encryption key,
• concatenating (S3) the salt value and the encrypted sensitive string to obtain a concatenated result,
• replacing (S4) in said software code said sensitive string by a protected value depending on said concatenated result.

2. The method of claim 1 wherein determining (S1) said salt value comprises: picking at random said salt value or deriving it from a predetermined secret value.

3. The method of any one of claim 1 to 2, wherein generating an encrypted sensitive string (S2) comprises :
• applying a XOR between the salt value and the sensitive string to obtain an encryption input,
• encrypting said obtained encryption input with said encryption key.

4. The method of any one of claim 1 to 2, wherein generating an encrypted sensitive string (S2) comprises :
• concatenating the salt value and the sensitive string to obtain an encryption input,
• encrypting said obtained encryption input with said encryption key.

5. The method of any one of claim 1 to 2, wherein generating an encrypted sensitive string (S2) comprises :
• applying a XOR between the salt value and the encryption key to obtain a diversified encryption key,
• encrypting said sensitive string with said obtained diversified encryption key.

6. The method of any one of claim 1 to 2, wherein generating an encrypted sensitive string (S2) comprises :
• concatenating the salt value and the encryption key to obtain a diversified encryption key,
• encrypting said sensitive string with said obtained diversified encryption key.

7. The method of any one of claim 1 to 2, wherein generating an encrypted sensitive string (S2) comprises :
• using the salt value as an initialization vector for the encryption process,
• encrypting said sensitive string with said encryption key.

8. The method of any one of claim 1 to 7, wherein said sensitive string is a public symbol of a sensitive function of a module of said software code.

9. The method of any one of claim 1 to 8, wherein said protected value is derived from said concatenated result by encoding said concatenated result.

10. The method of claim 9, wherein said encoding of said concatenated result uses a Base64 encoding scheme or a proprietary encoding scheme.

11. A computer program product directly loadable into the memory of at least one computer, comprising software code instructions for performing the steps of any one of claims 1 to 10, when said product is run on the computer.

12. A non-transitory computer readable medium storing executable computer code that when executed by a cryptographic device comprising a processor (11) performs the steps of any one of claims 1 to 10.

13. Cryptographic device (10) comprising a processor (11) configured to execute the steps of any one of claims 1 to 10.

14. A non-transitory machine-readable storage medium encoded with instructions of a secure software code for execution by a second processor (21) of an execution device (20), wherein said secure software code is a software code secured according to claim 1.

15. A method for executing a software code secured according to claim 1 and comprising the following steps performed by a second processor (21) of an execution device (20):
- retrieving (E1) a concatenated result from a protected value comprised in said secure software code;
- extracting (E2) a salt value and an encrypted sensitive string from the concatenated result;
- decrypting (E3) the encrypted sensitive string using a decryption key and the extracted salt value.
